(19) Europäisches Patentamt
European Patent Office
Office européen des brevets

(11) EP 3 096 178 A1

(12) **EUROPEAN PATENT APPLICATION**
published in accordance with Art. 153(4) EPC

(43) Date of publication:
**23.11.2016 Bulletin 2016/47**

(21) Application number: **15769826.7**

(22) Date of filing: **23.02.2015**

(51) Int Cl.:
***G02B 27/01*** *(2006.01)* ***B60K 35/00*** *(2006.01)*

(86) International application number:
**PCT/JP2015/000835**

(87) International publication number:
**WO 2015/145956 (01.10.2015 Gazette 2015/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.03.2014 JP 2014065196**
**09.01.2015 JP 2015003661**

(71) Applicant: **Panasonic Intellectual Property Management Co., Ltd.**
**Osaka-shi, Osaka 570-6207 (JP)**

(72) Inventor: **YONETANI, Yusuke**
**Osaka 540-6207 (JP)**

(74) Representative: **Eisenführ Speiser**
**Patentanwälte Rechtsanwälte PartGmbB**
**Postfach 10 60 78**
**28060 Bremen (DE)**

(54) **DISPLAY APPARATUS**

(57) A display apparatus includes: a display device that displays an image; and a projection optical system that projects the image displayed at the display device. The projection optical system includes first and second mirrors in order along an optical path from the display device to a viewer (to guide the image to a viewer's viewpoint area to display a virtual image). The apparatus satisfies conditions of $\theta x > \theta y$ ($\theta x$ : an incident angle in a longitudinal direction of the image on the first mirror, $\theta y$ : an incident angle in a crosswise direction of the image on the first mirror) and $0.2 < D1/Lh < 0.9$ (D1 : a distance between an image display surface of the display device and the first mirror (an optical path length at a center of the viewpoint area, Lh: a horizontal width of a virtual image visually recognized by the viewer).

FIG. 2

220
300
I
L
D
102
122
120
121
10
100
101

EP 3 096 178 A1

## Description

TECHNICAL FIELD

The present disclosure relates to a display apparatus that allows a viewer to visually recognize a virtual image by using a projection optical system.

BACKGROUND ART

PTL 1 discloses a head-up display in which a holder for supporting a mirror is provided with positioning projections to restrict a position displacement when a driving mirror is mounted.

PTL 2 discloses a head-up display which reflects light in a specified wavelength band and transmits light in another specified wavelength band to prevent damage to a liquid-crystal display device due to entry of exterior light as much as possible.

Citation List

Patent Literatures

PTL 1: Unexamined Japanese Patent Publication No. 2013-125193
PTL 2: Unexamined Japanese Patent Publication No. 2013-228442

SUMMARY OF THE INVENTION

In an aspect of the present disclosure, a display apparatus includes: a display device that displays an image, and a projection optical system that projects the image displayed at the display device. The projection optical system includes a first mirror and a second mirror disposed in order from a side of the display device along an optical path from the display device to a viewpoint area of a viewer. The display apparatus satisfies the following conditions (1) and (2):

$$\theta x > \theta y \qquad \ldots (1)$$

$$0.2 < D1/(T \times 2 \times \tan(\theta h/2)) < 0.9 \qquad \ldots (2)$$

where

$\theta x$: an incident angle of a light ray incident on the first mirror in a longitudinal direction of a display screen of the display device,
$\theta y$: an incident angle of the light ray incident on the first mirror in a crosswise direction of the display screen of the display device,
D1: a distance between an image display surface of the display device and the first mirror on an optical path of a light ray that reaches a center of the viewpoint area from the display device,
T: a distance from an eye of the viewer to the virtual image, and
$\theta h$: an angle made by a first straight line and a second straight line, where the first straight line is a straight line connecting one end in a horizontal direction of a virtual image visually recognized by the viewer and the eye of the viewer, and the second straight line is a straight line connecting the other end in the horizontal direction of the virtual image visually recognized by the viewer and the eye of the viewer.

In another aspect of the present disclosure, a display apparatus includes: a display device that displays an image; and a projection optical system that projects the image displayed at the display device. The projection optical system includes a first mirror and a second mirror disposed in order from a side of the display device along an optical path from the display device to a viewpoint area of a viewer. A reflection surface of at least one of the first mirror and the second mirror has a concave shape. Assuming that a reference light ray be a light ray which reaches a center of the viewpoint area of the viewer from a center of a display screen of the display device, that a reference intersection be an intersection of the second mirror and the reference light ray incident on the second mirror, that a first reference plane be a plane containing a light ray incident on the second mirror and a light ray reflected from the second mirror, a second reference plane be a plane perpendicular to the first reference plane, that a reference intersecting line be a line which is an intersecting line of the second mirror and the second reference plane and which passes through the reference intersection, and that a sag be a vertical distance from a tangent plane at the reference intersection on the reflection surface of the second mirror to the second mirror, a first sag at a first point on the tangent plane is different from a second sag at a second point on the tangent plane which is point-symmetrical to the first point with respect to the reference point.

## BRIEF DESCRIPTION OF DRAWINGS

FIG. 1 is a schematic diagram of a vehicle equipped with a display apparatus in accordance with the present disclosure;
FIG. 2 is a schematic diagram for explaining a display apparatus in accordance with each of first and second exemplary embodiments;
FIG. 3 is a schematic diagram for explaining a display apparatus in accordance with each of third to seventh exemplary embodiments;
FIG. 4 is a schematic diagram for explaining a shape of a first mirror in accordance with another exemplary embodiment;
FIG. 5 is a schematic diagram for explaining sags of a second mirror;
FIG. 6 is a diagram showing a coordinates system with a coordinate origin on a display device;
FIG. 7 is a schematic diagram for explaining an incident angle of a light ray incident on a first mirror;
FIG. 8 is a schematic diagram for explaining a positional relation between an eye of a viewer and a virtual image;
FIG. 9 is a diagram showing distortions of a virtual image visually recognized by a viewer in a first exemplary embodiment (Numerical Example 1);
FIG. 10 is a diagram showing distortions of a virtual image visually recognized by a viewer in a second exemplary embodiment (Numerical Example 2);
FIG. 11 is a diagram showing distortions of a virtual image visually recognized by a viewer in a third exemplary embodiment (Numerical Example 3);
FIG. 12 is a diagram showing distortions of a virtual image visually recognized by a viewer in a fourth exemplary embodiment (Numerical Example 4);
FIG. 13 is a diagram showing distortions of a virtual image visually recognized by a viewer in a fifth exemplary embodiment (Numerical Example 5);
FIG. 14 is a diagram showing distortions of a virtual image visually recognized by a viewer in a sixth exemplary embodiment (Numerical Example 6); and
FIG. 15 is a diagram showing distortions of a virtual image visually recognized by a viewer in a seventh exemplary embodiment (Numerical Example 7).

## DESCRIPTION OF EMBODIMENT

Hereinafter, exemplary embodiments will be described with reference to the accompanying drawings as appropriate. However, unnecessarily detailed description may occasionally be omitted. For example, detailed description of well-known matters and redundant description of substantially the same configuration may occasionally be omitted. This is to avoid the following description from becoming unnecessarily redundant, and to allow any person skilled in the art to easily understand the description.

Also, it should be noted that the following description and the accompanying drawings are provided to allow any person skilled in the art to fully understand the present disclosure, and that it is not intended to limit the subject matter described in the claims by the following description and the accompanying drawings.

## FIRST TO SEVENTH EXEMPLARY EMBODIMENTS

### 1. Configuration

Detailed exemplary embodiments and Examples of display apparatus 10 in accordance with the present disclosure will hereafter be described with reference to the drawings.

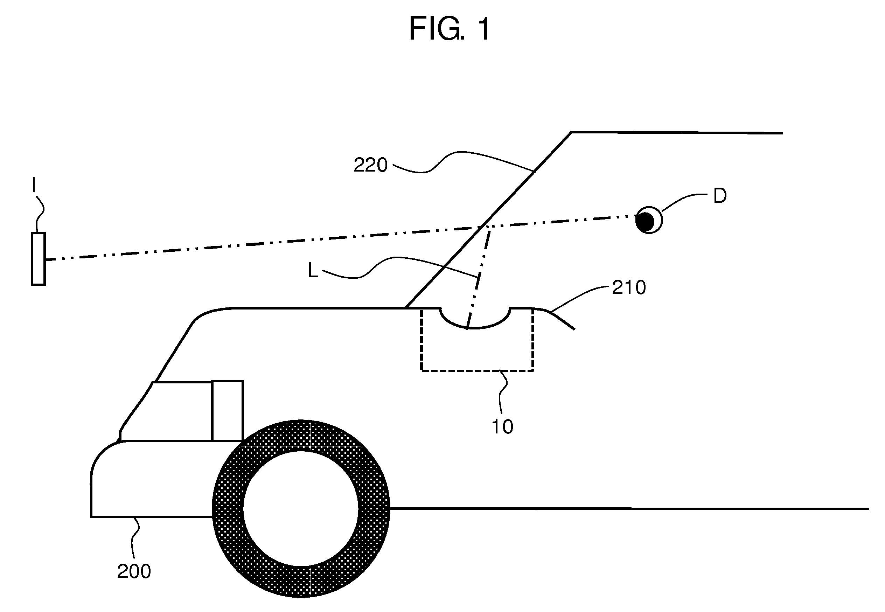

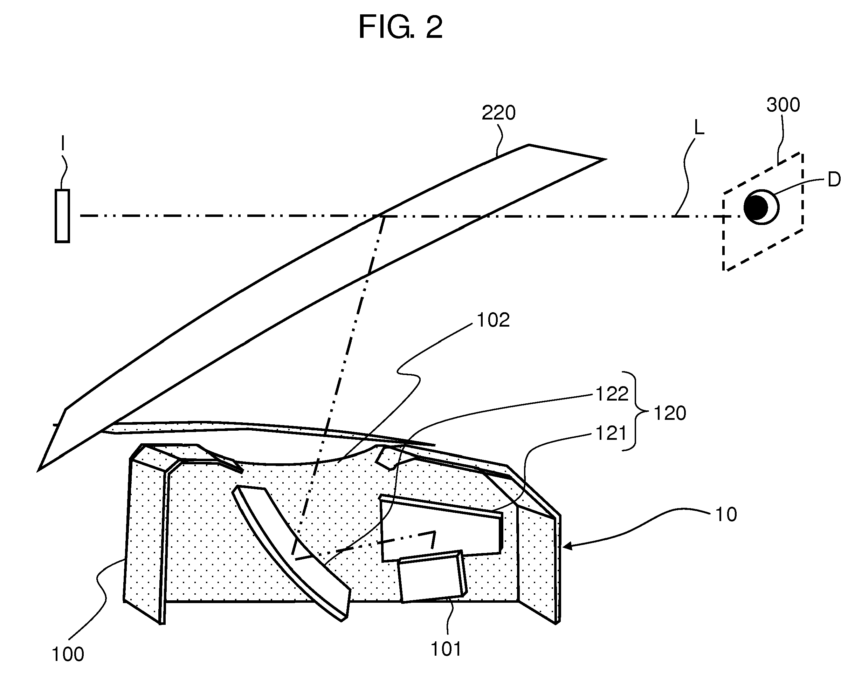

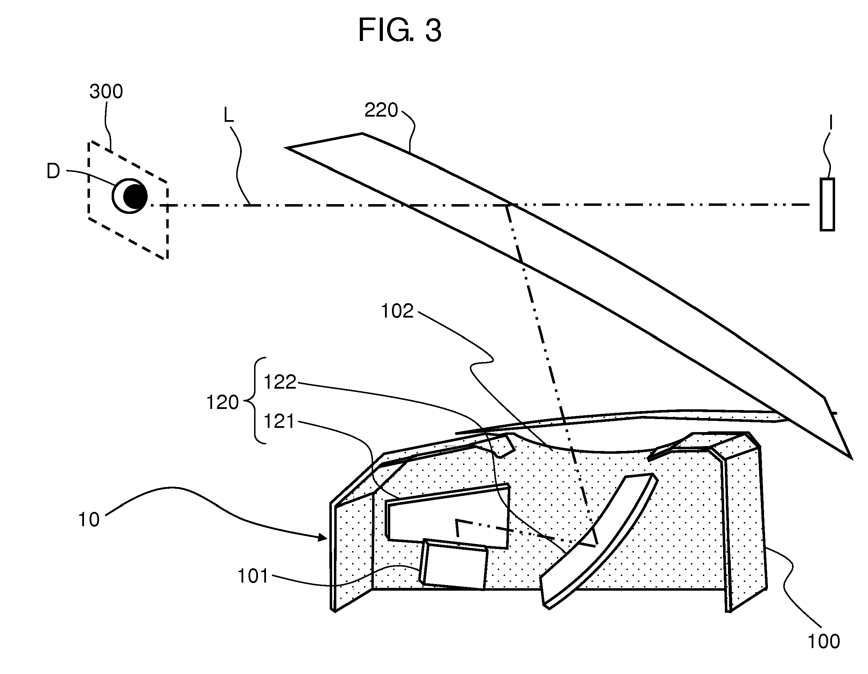

FIG. 1 is a schematic diagram of vehicle 200 equipped with display apparatus 10 in accordance with the present disclosure. FIG. 2 is a schematic diagram for explaining display apparatus 10 in accordance with each of first and second exemplary embodiments. FIG. 3 is a schematic diagram for explaining display apparatus 10 in accordance with each of third to seventh exemplary embodiments.

Referring to FIG. 1, display apparatus 10 is disposed within dashboard 210 below windshield 220 of vehicle 200. Display apparatus 10 includes chassis 100, projection optical system 120, and display device 101. Display apparatus 10 allows an image displayed by display device 101 to be reflected by windshield 220 to present virtual image I to viewer D in vehicle 200.

Referring to FIG. 2, chassis 100 is provided with opening 102. Opening 102 may be covered with a transparent cover. This transparent cover may be a lens-shaped cover to adjust the magnification of the virtual image.

Projection optical system 120 includes first mirror 121 and second mirror 122. A light ray (an image) output from display device 101 is reflected by first mirror 121, second mirror 122 and windshield 220 in this order to reach viewpoint area 300 of viewer D and to be visually recognized as virtual image I by viewer D. Here, viewpoint area 300 is an area in which viewer D can observe the entire virtual image I with no missing portion.

Devices that can be used as display device 101 include, for example, liquid crystal displays, organic light emitting diodes (electroluminescent devices), plasma displays, and the like.

In the first exemplary embodiment, a display surface of display device 101 faces toward first mirror 121. A reflecting surface of first mirror 121 is directed toward second mirror 122 so that an image displayed by display device 101 can be reflected on second mirror 122.

In the first, second, third, fourth, sixth and seventh exemplary embodiments, the reflecting surface of first mirror 121 is a free-form surface having a convex shape. The convex surface of first mirror 121 allows light rays traveling from first mirror 121 to second mirror 122 to be converged, so that the area of the second mirror can be reduced. Second mirror 122 is a concave surface mirror having a free-form surface shape. The concave surface of second mirror 122 allows light rays reflected by the second mirror to be diverged, so that the virtual image can be magnified. Each of first mirror 121 and second mirror 122 adopts a free-form surface shape for the purpose of correcting distortions of a virtual image caused by reflection so that a favorable virtual image can be seen throughout the entire viewpoint area.

In the fifth exemplary embodiment, first mirror 121 is a toroidal mirror having a convex shape. The toroidal surface shape of first mirror 121 is advantageous in that the mirror can be produced easily.

Second mirror 122 is a concave mirror having a free-form surface shape.

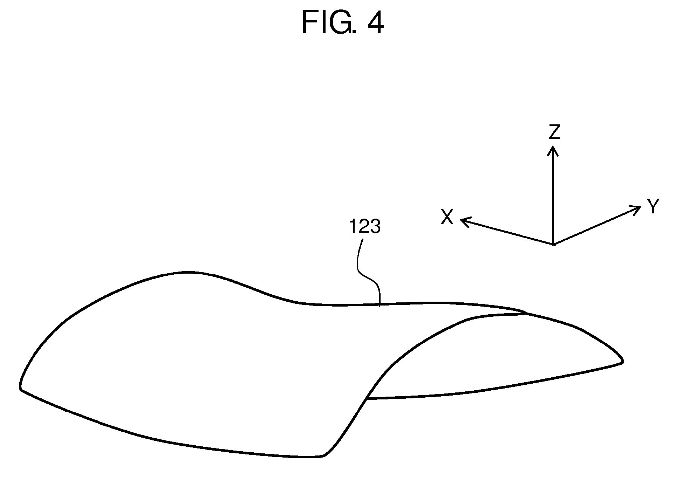

First mirror 121 used in display apparatus 10 in accordance with each of the first to seventh exemplary embodiments has a shape that is rotationally asymmetrical. However, first mirror 121 may have a surface shape in which a radius of curvature in an x-direction is different in sign from a radius of curvature in a y-direction as shown in FIG. 4.

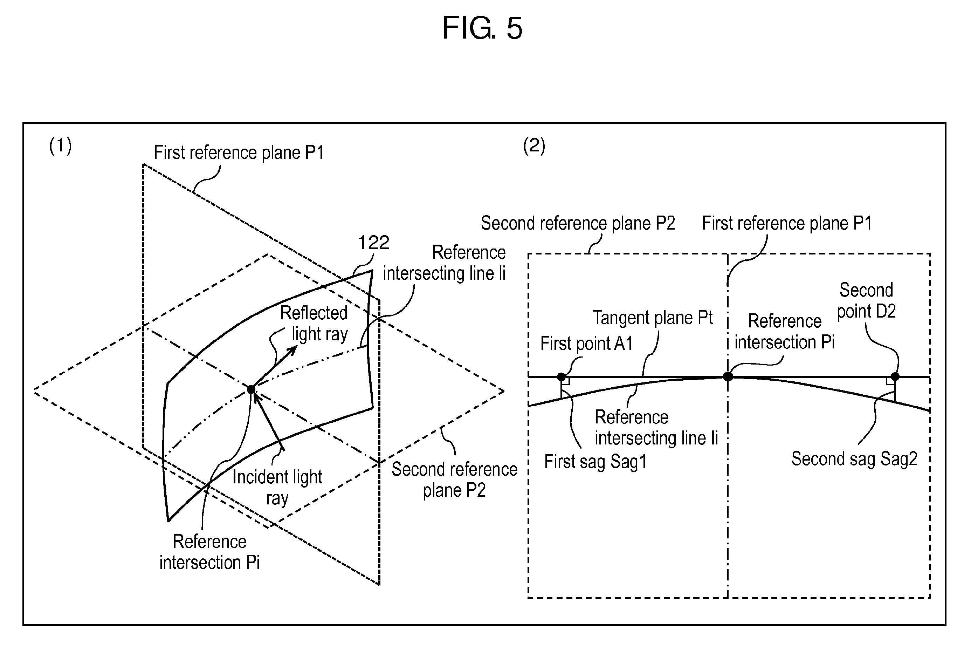

FIG. 5 is a schematic diagram for explaining sags of the second mirror.

In more detail, diagram (1) of FIG. 5 shows a relation between second mirror 122 and the reference plane and so on. Hereinafter, a light ray which reaches a center of the viewpoint area of the viewer from a center of a display screen of the display device will be referred to as a reference light ray. Reference intersection Pi in diagram (1) of FIG. 5 is an intersection of the second mirror and the reference light ray incident on the second mirror. First reference plane P1 is a plane containing a light ray incident on the second mirror and a light ray reflected from the second mirror. Second reference plane P2 is a plane perpendicular to first reference plane P1. Reference intersecting line li is a line which is an intersecting line of second mirror 122 and second reference plane P2 and which passes through reference intersection Pi.

Diagram (2) of FIG. 5 shows a relation between a reflecting surface of second mirror 122 on second reference plane P2 shown in diagram (1) of FIG. 5 (reference intersecting line li) and a tangent plane Pt of second mirror 122 at reference intersection Pi. Here, a vertical distance from a point on tangent plane Pt to the second mirror is defined as sag. Assuming that an arbitrary point on the intersecting line of second reference plane P2 and tangent plane Pt be first point A1 and that a point which is symmetrical to first point A1 with respect to reference intersection Pi be second point A2, sag Sag1 at first point A1 is different from sag Sag2 at second point A2 in second mirror 122 in the above exemplary embodiments. By configuring the second mirror in this manner, it is possible to suppress distortions of the virtual image in the lateral direction and changes in focal length in the lateral direction, even in a case that an image is displayed on a projection surface which has a laterally asymmetrical shape with respect to the reference intersecting line like the windshield. Particularly, the windshield of the vehicle has such a shape that increases in the amount of curvature as becoming closer to outer sides of the vehicle. Accordingly, an image projecting area disposed near an outer side of the vehicle on the windshield increases distortions of the virtual image in the lateral direction and changes in focal length in the lateral direction. To solve this problem, one of sags Sag1 and Sag2 is made larger than the other, regardless of the respective distances from the reference light ray (reference intersection Pi) to first point A1 and second point A2. With this configuration, it is possible to suppress the distortions of the virtual image and the changes in focal length in the case of displaying an image in an image projecting area which is near an outer side of a vehicle and is large in curvature.

Also, the free-form surface of second mirror 122 is configured by a plurality of local surfaces. Assuming that the free-form surface of second mirror 122 be divided to an upper surface which is upper than reference intersecting line li in the vertical direction and a lower surface which is lower than reference intersecting line li in the vertical direction, a focal length of a local surface containing an arbitrary point on the upper surface is different from a focal length of a local surface containing an arbitrary point on the lower surface. Second mirror 122 configured in this manner makes it possible to project an image with no distortions even on a surface having a curvature varying in the vertical direction like the windshield. Focal lengths of arbitrary two local surfaces contained in the upper surface than reference intersecting line li may be the same.

2. Preferable Conditions

Hereinafter, conditions that are preferably satisfied by display apparatus 10 in accordance with each of the first to seventh exemplary embodiments will be described. A plurality of preferable conditions are defined for display apparatus 10 in accordance with each exemplary embodiment, and such a configuration is most preferable that satisfies all of the plurality of conditions. However, it is also possible to satisfy an individual condition to obtain a display apparatus which shows a corresponding advantageous effect.

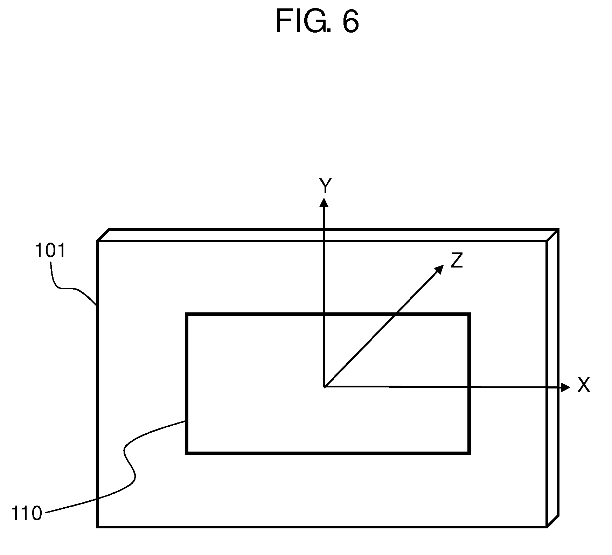

FIG. 6 is a diagram showing a coordinates system with a coordinate origin on display device 101. The following description will be made by using an XYZ coordinate system defined with respect to the coordinate origin. The coordinate origin is a center of display screen 110 on display device 101. An X-axis is an axis extending in a longitudinal direction (a horizontal direction of the pixel array) of display screen 110. A Y-axis is an axis extending in a crosswise direction (a vertical direction of the pixel array) of display screen 110. A Z-axis is an axis perpendicular to display screen 110.

Display apparatus 10 in accordance with the present disclosure may preferably satisfy the following conditions (1) and (2):

$$\theta x > \theta y \qquad \ldots (1)$$

$$0.2 < D1/(T \times 2 \times \tan(\theta h/2)) < 0.9 \qquad \ldots (2)$$

where

$\theta x$: an incident angle of a light ray incident on the first mirror in the longitudinal direction of the display screen of the display device,
$\theta y$: an incident angle of the light ray incident on the first mirror in the crosswise direction of the display screen of the display device,
D1: a distance between an image display surface of the display device and the first mirror on an optical path of a light ray that reaches a center of the viewpoint area from the display device,
T: a distance from an eye of the viewer to the virtual image, and
$\theta h$: an angle made by a first straight line and a second straight line, where the first straight line is a straight line connecting one end in a horizontal direction of the virtual image visually recognized by the viewer and the eye of the viewer, and the second straight line is a straight line connecting the other end in the horizontal direction of the virtual image visually recognized by the viewer and the eye of the viewer.

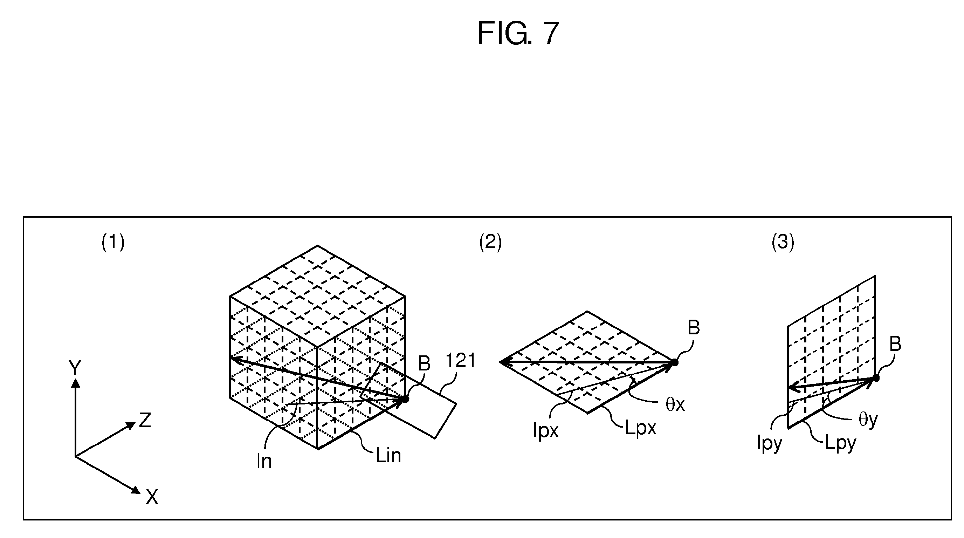

FIG. 7 is a schematic diagram for explaining an incident angle of a light ray incident on the first mirror. More specifically, diagram (1) of FIG. 7 is a schematic diagram stereoscopically showing reflection of incident light ray Lin by first mirror 121. In diagram (1) of FIG. 7, the XYZ coordinate space shown in FIG. 5 is expressed by a grid for the purpose of illustration. Normal In shown in diagram (1) of FIG. 7 is a straight line which passes through point B on first mirror 121 and is perpendicular to a tangent plane at point B. First mirror 121 is disposed so as to be tilted with respect to the display device. Accordingly, normal In is tilted with respect to the Z-axis. As shown in diagram (1) of FIG. 7, incident light ray Lin of first mirror 121 is incident on point B on first mirror 121, and is reflected by first mirror 121 in the direction toward second mirror 122.

Diagram (2) of FIG. 7 shows a projection of incident light ray Lin and normal In shown in diagram (1) of FIG. 7 on an XZ plane. Incident angle $\theta x$ of incident light ray Lin in the longitudinal direction of the display screen of the display device (in the X-axis direction) is an angle made by projection Ipx of normal In and projection Lpx of incident light ray Lin as shown in diagram (2) of FIG. 7.

Diagram (3) of FIG. 7 shows a projection of incident light ray Lin and normal In shown in diagram (1) of FIG. 7 on a YZ plane. Incident angle $\theta y$ of incident light ray Lin in the crosswise direction of the display screen of the display device (in the Y-axis direction) is an angle made by projection Ipy of normal In and projection Lpy of incident light ray Lin as shown in diagram (3) of FIG. 7.

The above condition (1) defines a magnitude relation between the incident angle in the longitudinal direction of display screen 110 of display device 101 and the incident angle in the crosswise direction of display screen 110 of display device 101. More specifically, the condition (1) means that incident angle $\theta x$ in the longitudinal direction of display screen 110 of display device 101 is larger than incident angle $\theta y$ in the crosswise direction of display screen 110 of display device 101. If the condition (1) is not satisfied, display device 101 is disposed so as to be largely shifted in the vertical direction relative to first mirror 121, so that it is difficult to provide a display apparatus that is thin in the vertical direction.

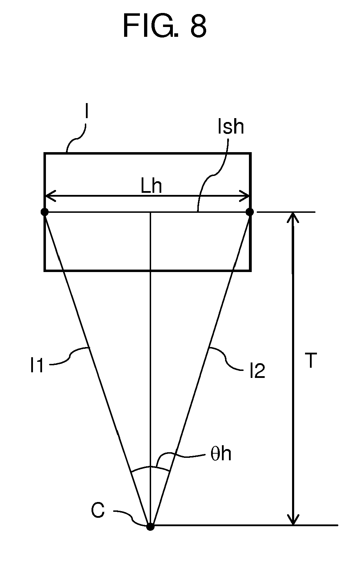

FIG. 8 is a schematic diagram for explaining a positional relation between an eye of a viewer and a virtual image.

Referring to FIG. 8, symbol T indicates a distance from an eye of a viewer to virtual image 1. Line segment lsh is a horizontal line segment that passes a center of virtual image I to divide virtual image I in the vertical direction into two parts. Symbol Lh indicates a width in the horizontal direction of virtual image I that can be visually recognized by the viewer (i.e., the length of line segment lsh). Symbol $\theta h$ is an expression of width Lh by an angle viewed from a position of the viewer's eye. In detail, $\theta h$ is an angle made by straight line 11 and straight line 12. Here, straight line 11 is a line connecting position C of the viewer's eye and one end of virtual image I in the horizontal direction (i.e., one end of line segment lsh). Straight line 12 is a line connecting position C of the viewer's eye and the other end of virtual image I in the horizontal direction (i.e., the other end of line segment lsh). Here, line segment Lh and angle $\theta h$ satisfy the following relation:

$$Lh = T \times 2 \times \tan(\theta h/2).$$

The above condition (2) defines a ratio of a distance between the surfaces of display device 101 and first mirror 121 and a lateral size of virtual image I. If the value of (T x 2 x tan($\theta$h/2)) is equal to or larger than the upper limit of the condition (2), the distance between the surfaces of first mirror 121 and second mirror 122 becomes excessively large, so that it becomes difficult to provide a small-size display apparatus. If the value of (T x 2 x tan($\theta$h/2)) is equal to or smaller than the lower limit of the condition (2), the curvature of second mirror 122 becomes large, so that it becomes difficult to correct the screen distortions of the virtual image.

Further, the above-described effects can be enhanced by satisfying the following condition (2'):

$$0.2 < D1/(T \times 2 \times \tan(\theta h/2)) < 0.6 \qquad \ldots (2')$$

Further, the above-described effects can be further enhanced by satisfying the following condition (2"):

$$0.25 < D1/(T \times 2 \times \tan(\theta h/2)) < 0.4 \qquad \ldots (2'')$$

3. Advantageous Effects and Others

Advantageous effects of display apparatus 10 configured as described above will hereinafter be described.

Display apparatus 10 in accordance with each of the first to seventh exemplary embodiments includes display device 101 that displays an image, and projection optical system 120 that projects the image displayed at display device 101. Projection optical system 120 includes first mirror 121 and second mirror 122 disposed in this order along optical path X from display device 101 to viewer D.

Display apparatus 10 in accordance with each of the first to seventh exemplary embodiments projects an image displayed at display device 101 on windshield 220 to provide viewer D with virtual image I. This allows viewer D to visually recognize the image displayed on display device 101 without blocking the front view of viewer D.

In display apparatus 10 in accordance with the present exemplary embodiment, second mirror 122 has a free-form surface shape. This makes it possible to favorably correct screen distortions generated at windshield 220.

In display apparatus 10 in accordance with the present exemplary embodiment, first mirror 121 may preferably have a free-form surface shape. This allows makes it possible to favorably correct screen distortions throughout the entire viewpoint area 300 of viewer D.

In display apparatus 10 in accordance with the present exemplary embodiment, first mirror 121 has a positive curvature. In other words, first mirror 121 has a convex surface. This allows the light flux incident on second mirror 122 to be narrowed, so that second mirror 122 can be downsized. Accordingly, display apparatus 10 can be downsized.

In display apparatus 10 in accordance with the present exemplary embodiment, first mirror 121 has a trapezoidal outer shape. This makes it possible to reduce unnecessary areas in first mirror 121 other than the area in which an image is reflected, so that display apparatus 10 can be downsized. It should be noted that the outer shape of first mirror 121 may not be limited to a trapezoid, and may be occasionally be changed depending on the shape of the effective area.

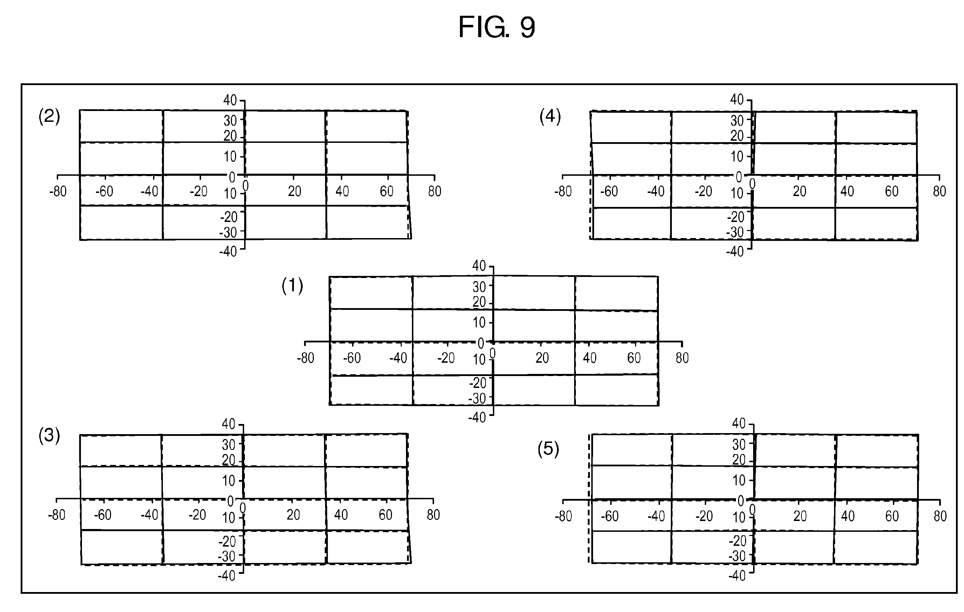

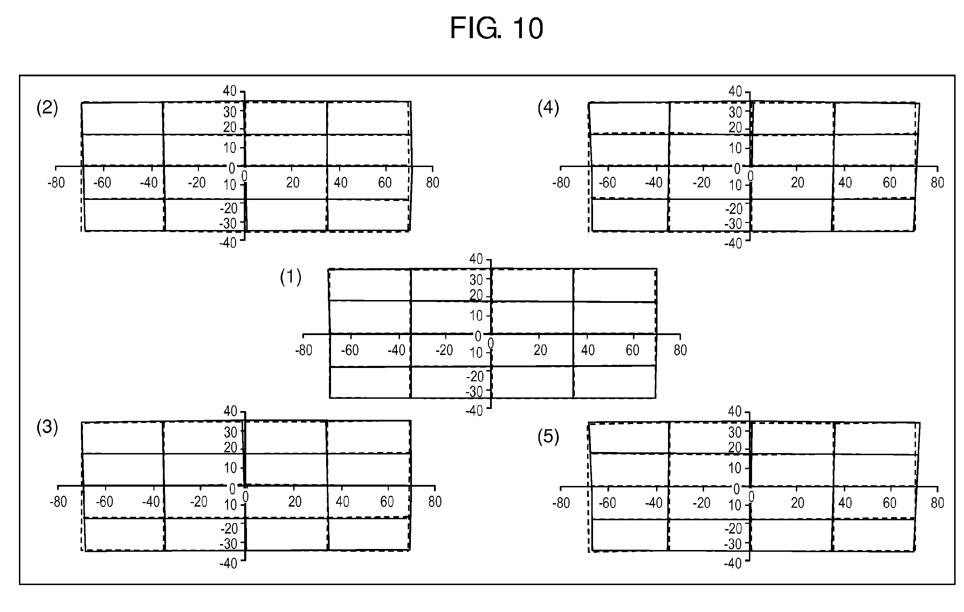

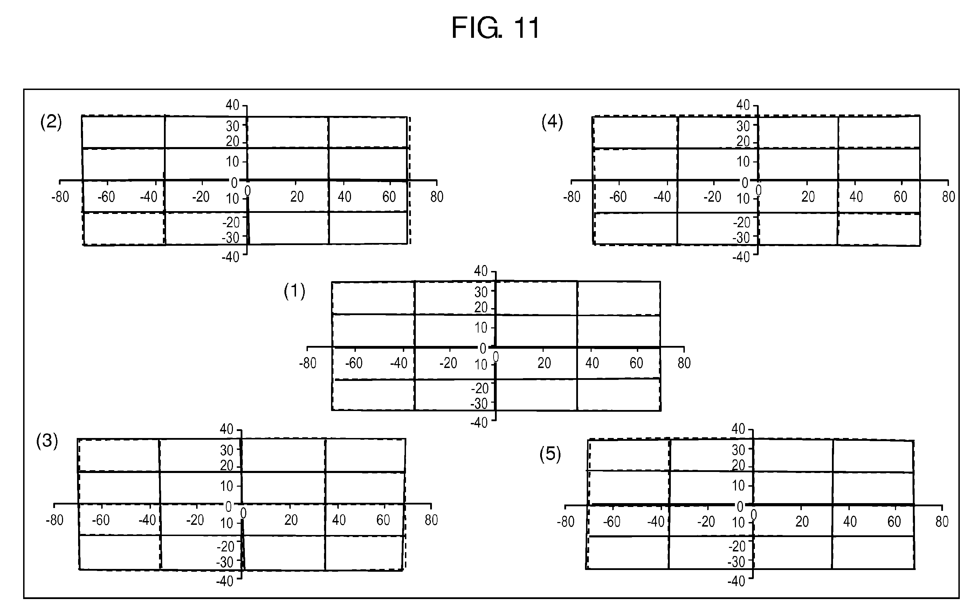

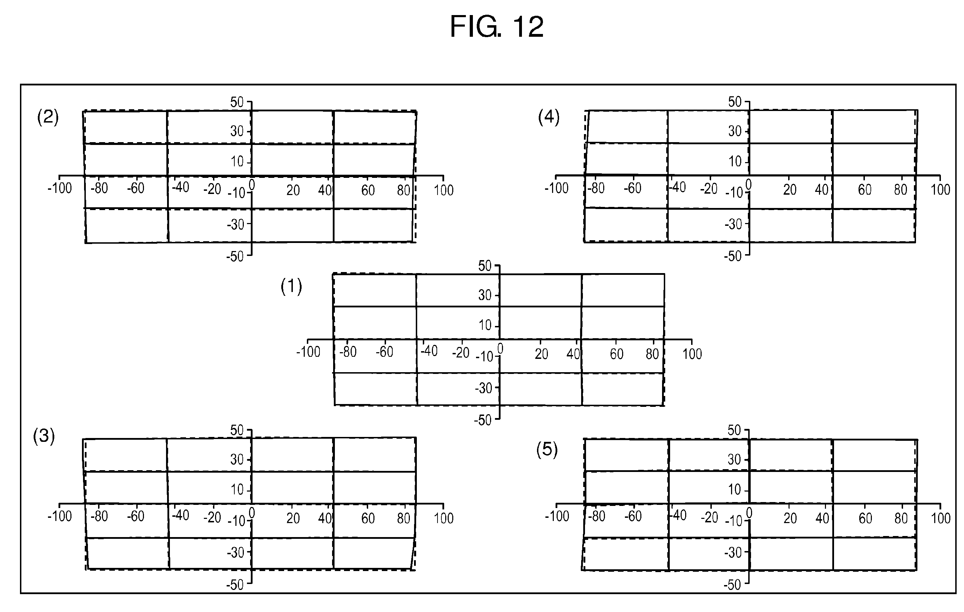

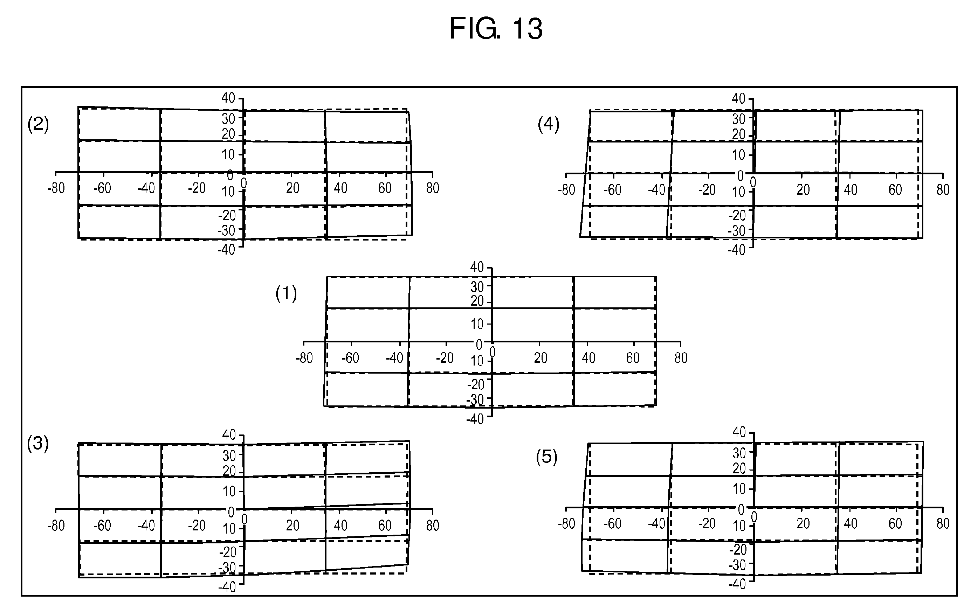

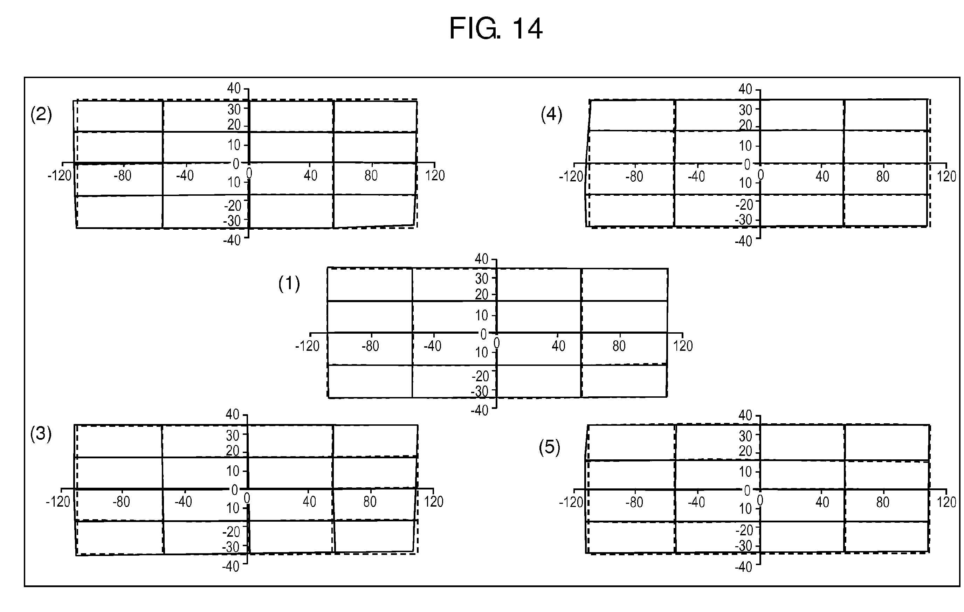

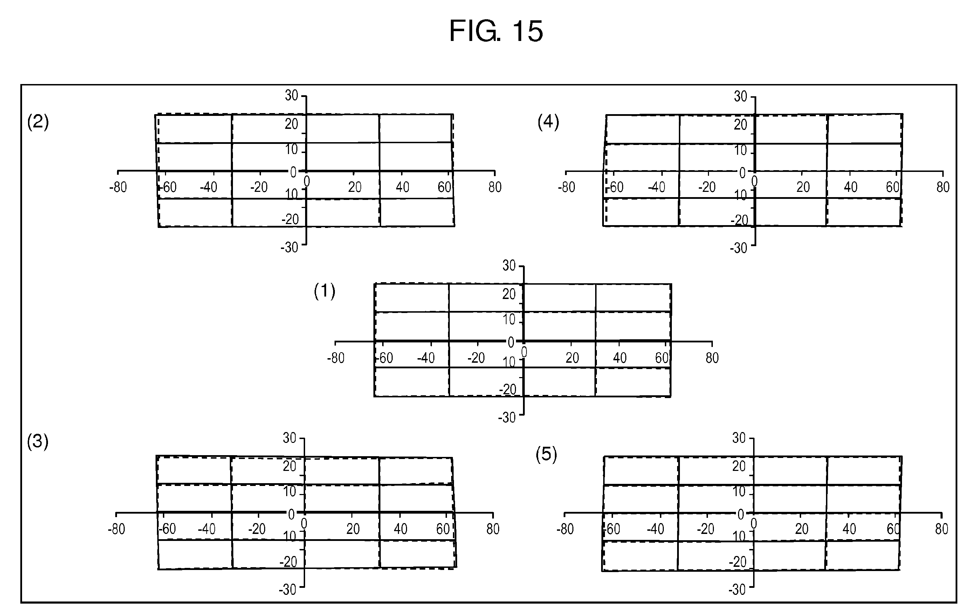

FIG. 9 to FIG. 15 are diagrams showing virtual images I that are projected by display apparatuses 10 in accordance with the first to seventh exemplary embodiments, respectively, and are visually recognized by a viewer from viewpoint area 300. In display apparatus 10 of the present disclosure, viewpoint area 300 is a rectangular area of 135 mm wide by 40 mm tall. A broken-line shape indicates an ideal shape of virtual image I seen from viewpoint area 300. A solid-line image indicates virtual image I that is projected using display apparatus 10 in accordance with a corresponding exemplary embodiment.

Referring to each of FIG. 9 to FIG. 15, diagram (1) shows screen distortions when virtual image I is viewed from a center position of viewpoint area 300 as seen from viewer D. Diagram (2) shows screen distortions when virtual image I is viewed from an upper left position of viewpoint area 300. Diagram (3) shows screen distortions when virtual image I is viewed from a lower left position of viewpoint area 300. Diagram (4) shows screen distortions when virtual image I is viewed from an upper right position of viewpoint area 300. Diagram (5) shows screen distortions when virtual image I is viewed from a lower right position of viewpoint area 300.

Screen distortions can be favorably corrected throughout the entire viewpoint area 300 by using display apparatus 10 of the present disclosure. In other words, viewer D can visually recognize a favorable virtual image from any observing position in viewpoint area 300.

NUMERICAL EXAMPLES

Hereinafter, Numerical Examples of display apparatuses which were actually implemented in accordance with the first to seventh exemplary embodiments will be described. In each Numerical Example, unit of each length in each TABLE is "mm" (millimeters), and unit of each angle is "°" (degrees). Also, each free-form surface in each Numerical Example is defined by the following formulas:

Formula 1:

$$z = \frac{cr^2}{1+\sqrt{1-(1+k)c^2r^2}} + \sum_{j\ \ 2} c_j x^m y^n$$

Formula 2:

$$j = \frac{(m+n)^2 + m + 3n}{2} + 1$$

where z is a sag at coordinates (x, y) with an origin on an axis defining the surface, r is a radius of curvature at the origin of the axis defining the surface, c is a curvature at the origin of the axis defining the surface, k is a conic constant, and Cj is a coefficient of monomial $x^m y^n$.

Also, in each Numerical Example, the coordinate origin, which becomes a reference, is the center of the display screen of the display device, and the X-, Y- and Z-axes passing through the coordinate origin are defined as shown in FIG. 5.

In eccentric data in each Numerical Example, ADE is a rotation angle when a mirror is rotated about the X-axis, and expressed as a positive value when the rotation direction is the same as the order of the first quadrant to the fourth quadrant in the YZ orthogonal coordinate system. BDE is a rotation angle when the mirror is rotated about the Y-axis, and expressed as a positive value when the rotation direction is the same as the order of the first quadrant to the fourth quadrant in the XZ orthogonal coordinate system. CDE is a rotation angle when the mirror is rotated about the Z-axis, and expressed as a positive value when the rotation direction is opposite to the order of the first quadrant to the fourth quadrant in the XY orthogonal coordinate system.

Numerical Example 1

A projection optical system in Numerical Example 1 corresponds to projection optical system 120 of the first exemplary embodiment. Data configuring projection optical system 120 in Numerical Example 1 are shown in TABLE 1, and coefficients of the polynomial free-form surfaces are shown in TABLE 2.

TABLE 1

| | Surface number | Shape | Radius of curvature in X-direction | Radius of curvature in Y-direction | Eccentric data | | | | | |
|---|---|---|---|---|---|---|---|---|---|---|
| | | | | | X | Y | Z | ADE | BDE | CDE |
| Display surface | 1 | | ∞ | ∞ | 0 | 0 | 0 | 0 | 0 | 0 |
| First mirror | 2 | Free-form surface | 739.498 | 739.498 | 11.367 | 16.589 | 63.707 | 2.203 | 40.455 | -19.782 |
| Second mirror | 3 | Free-form surface | -622.148 | -622.148 | 101.186 | 27.634 | 50.411 | 25.348 | 73.089 | -38.836 |
| Front glass | 4 | Toroidal | -2581.734 | -4279.459 | -139.537 | 120.416 | 86.610 | 81.015 | -6.519 | -74.528 |
| Eye | 5 | | ∞ | ∞ | -887.210 | -136.552 | 199.732 | 106.577 | -66.329 | -52.072 |

TABLE 2

| Surface number | Polynomial coefficients | | | | | | | |
|---|---|---|---|---|---|---|---|---|
| 2 | C1 | 0.00000E+00 | C11 | -2.35552E-08 | C21 | -1.33525E-09 | C31 | 0.00000E+00 |
| | C2 | -1.71358E-01 | C12 | -6.39833E-08 | C22 | -2.88838E-11 | C32 | 0.00000E+00 |
| | C3 | 2.86434E-02 | C13 | 2.40676E-07 | C23 | 1.54249E-11 | C33 | 0.00000E+00 |
| | C4 | 8.54070E-04 | C14 | 2.48405E-07 | C24 | 7.45989E-12 | C34 | 0.00000E+00 |
| | C5 | 3.26247E-04 | C15 | -4.85861 E-07 | C25 | -3.90334E-10 | C35 | 0.00000E+00 |
| | C6 | -8.34001 E-04 | C16 | 1.31075E-09 | C26 | 6.88465E-10 | C36 | 0.00000E+00 |
| | C7 | -2.71571E-06 | C17 | 9.71092E-10 | C27 | -4.24778E-10 | | |
| | C8 | -6.01135E-06 | C18 | -1.30382E-08 | C28 | 3.42034E-11 | | |
| | C9 | 1.06619E-05 | C19 | 2.90280E-08 | C29 | 0.00000E+00 | | |
| | C10 | -8.77955E-06 | C20 | -1.62361 E-08 | C30 | 0.00000E+00 | | |
| 3 | C1 | 0.00000E+00 | C11 | -5.41168E-10 | C21 | -1.50644E-09 | C31 | 1.62544E-15 |
| | C2 | 3.19420E-03 | C12 | -5.35534E-09 | C22 | -6.07758E-13 | C32 | 1.13876E-14 |
| | C3 | -2.67168E-02 | C13 | 3.23603E-09 | C23 | -2.19609E-13 | C33 | 3.60047E-14 |
| | C4 | 8.31744E-04 | C14 | 2.83040E-08 | C24 | -3.04501 E-13 | C34 | -5.88298E-14 |
| | C5 | 7.93432E-05 | C15 | -5.27327E-08 | C25 | 3.91435E-12 | C35 | -5.81222E-15 |
| | C6 | -3.26946E-05 | C16 | -6.53889E-1 | C26 | 2.59318E-12 | C36 | -9.92990E-15 |
| | C7 | 1.43527E-06 | C17 | -5.32355E-1 | C27 | -2.01610E-12 | | |
| | C8 | -1.38159E-06 | C18 | -3.62910E-11 | C28 | -2.25151 E-11 | | |
| | C9 | 1.11163E-06 | C19 | 4.24061E-10 | C29 | -1.66632E-15 | | |
| | C10 | 8.12545E-07 | C20 | 1.75675E-10 | C30 | -2.86409E-17 | | |

Numerical Example 2

A projection optical system in Numerical Example 2 corresponds to projection optical system 120 of the second exemplary embodiment. Data configuring projection optical system 120 in Numerical Example 2 are shown in TABLE 3, and coefficients of the polynomial free-form surfaces are shown in TABLE 4.

TABLE 3

| | Surface number | Shape | Radius of curvature in X-direction | Radius of curvature in Y-direction | Eccentric data | | | | | |
|---|---|---|---|---|---|---|---|---|---|---|
| | | | | | X | Y | Z | ADE | BDE | CDE |
| Display surface | 1 | | ∞ | ∞ | 0 | 0 | 0 | 0 | 0 | 0 |
| First mirror | 2 | Free-form surface | 660.228 | 660.228 | -2.272 | 20.480 | 81.158 | -9.457 | 61.096 | -10.074 |
| Second mirror | 3 | Free-form surface | -689.899 | -689.899 | 86.585 | 43.354 | 117.931 | 177.364 | 74.882 | 162.881 |
| Front glass | 4 | Toroidal | -3745.758 | -34321.990 | -57.333 | 107.715 | 60.684 | 66.746 | 5.229 | -103.683 |
| Eye | 5 | | ∞ | ∞ | -835.258 | -188.405 | -306.928 | 38.681 | -58.930 | -116.364 |

TABLE 4

| Surface number | Polynomial coefficients | | | | | | | |
|---|---|---|---|---|---|---|---|---|
| 2 | C1 | 0.00000E+00 | C11 | 4.32422E-09 | C21 | -3.76002E-10 | C31 | 0.00000E+00 |
| | C2 | -1.98348E-01 | C12 | -1.52395E-07 | C22 | 1.59660E-11 | C32 | 0.00000E+00 |
| | C3 | 1.24323E-01 | C13 | 1.72203E-07 | C23 | -1.27180E-11 | C33 | 0.00000E+00 |
| | C4 | 7.39210E-04 | C14 | 1.64200E-07 | C24 | 6.29872E-11 | C34 | 0.00000E+00 |
| | C5 | 3.01256E-06 | C15 | -2.14104E-07 | C25 | -3.14440E-10 | C35 | 0.00000E+00 |
| | C6 | -7.70715E-04 | C16 | -1.47396E-10 | C26 | 5.04520E-10 | C36 | 0.00000E+00 |
| | C7 | -3.21730E-06 | C17 | 3.92452E-09 | C27 | -2.88368E-10 | | |
| | C8 | -5.09481 E-06 | C18 | -1.52920E-08 | C28 | 4.46431 E-11 | | |
| | C9 | 1.03166E-05 | C19 | 2.25957E-08 | C29 | 0.00000E+00 | | |
| | C10 | -6.02037E-06 | C20 | -1.06078E-08 | C30 | 0.00000E+00 | | |
| 3 | C1 | 0.00000E+00 | C11 | 1.47456E-09 | C21 | 1.72599E-11 | C31 | -5.35147E-15 |
| | C2 | -3.04647E-02 | C12 | -5.54403E-09 | C22 | -6.24638E-13 | C32 | 2.80027E-14 |
| | C3 | 1.89054E-03 | C13 | -8.02388E-10 | C23 | -2.77219E-13 | C33 | 1.03787E-14 |
| | C4 | 7.44528E-04 | C14 | 1.76535E-08 | C24 | -1.32467E-12 | C34 | -5.47949E-14 |
| | C5 | -6.27065E-05 | C15 | -4.55303E-09 | C25 | 6.40220E-12 | C35 | 1.78466E-13 |
| | C6 | 9.72577E-05 | C16 | -6.83523E-11 | C26 | 5.45446E-13 | C36 | -1.44168E-13 |
| | C7 | 1.58209E-06 | C17 | -4.68646E-11 | C27 | -5.80568E-12 | | |
| | C8 | -1.43009E-06 | C18 | -1.29548E-10 | C28 | 4.80393E-13 | | |
| | C9 | 3.04767E-07 | C19 | 5.00167E-10 | C29 | -1.85302E-15 | | |
| | C10 | -3.63963E-07 | C20 | -3.24307E-10 | C30 | -1.04464E-15 | | |

Numerical Example 3

A projection optical system in Numerical Example 3 corresponds to projection optical system 120 of the third exemplary embodiment. Data configuring projection optical system 120 in Numerical Example 3 are shown in TABLE 5, and coefficients of the polynomial free-form surfaces are shown in TABLE 6.

TABLE 5

| | Surface number | Shape | Radius of curvature in X-direction | Radius of curvature in Y-direction | Eccentric data | | | | | |
|---|---|---|---|---|---|---|---|---|---|---|
| | | | | | X | Y | Z | ADE | BDE | CDE |
| Display surface | 1 | | ∞ | ∞ | 0 | 0 | 0 | 0 | 0 | 0 |
| First mirror | 2 | Free-form surface | 662.097 | 662.097 | 2.512 | 12.754 | 80.210 | 10.181 | -60.311 | 10.834 |
| Second mirror | 3 | Free-form surface | -761.560 | -761.560 | -104.111 | 14.593 | 117.273 | 132.121 | -64.414 | 135.270 |
| Front glass | 4 | Toroidal | -3745.758 | -34321.990 | 24.434 | 124.881 | 15.230 | 91.458 | 19.324 | 104.050 |
| Eye | 5 | | ∞ | ∞ | 904.028 | 62.464 | -209.296 | 34.620 | 73.061 | 149.102 |

TABLE 6

| Surface number | Polynomial coefficients | | | | | | | |
|---|---|---|---|---|---|---|---|---|
| 2 | C1 | 0.00000E+00 | C11 | -9.60354E-09 | C21 | 8.40482E-09 | C31 | 0.00000E+00 |
| | C2 | 2.02263E-01 | C12 | -6.31580E-08 | C22 | -2.96367E-12 | C32 | 0.00000E+00 |
| | C3 | 1.82711E-02 | C13 | -8.59743E-08 | C23 | 2.89956E-11 | C33 | 0.00000E+00 |
| | C4 | -9.24241 E-05 | C14 | -1.76220E-07 | C24 | 6.95269E-11 | C34 | 0.00000E+00 |
| | C5 | 1.10133E-03 | C15 | -2.49457E-07 | C25 | 2.55958E-10 | C35 | 0.00000E+00 |
| | C6 | -5.15702E-04 | C16 | -2.87219E-10 | C26 | 5.40893E-10 | C36 | 0.00000E+00 |
| | C7 | 2.59274E-07 | C17 | 1.34379E-09 | C27 | 4.30662E-10 | | |
| | C8 | -1.22060E-06 | C18 | 6.87221E-09 | C28 | 9.47159E-11 | | |
| | C9 | -9.05271 E-06 | C19 | 1.88622E-08 | C29 | 0.00000E+00 | | |
| | C10 | -1.37182E-05 | C20 | 2.05743E-08 | C30 | 0.00000E+00 | | |
| 3 | C1 | 0.00000E+00 | C11 | 6.71978E-10 | C21 | -6.70083E-11 | C31 | 3.26979E-15 |
| | C2 | 4.30815E-02 | C12 | 5.52303E-09 | C22 | -5.39323E-13 | C32 | 4.88350E-15 |
| | C3 | -1.94105E-02 | C13 | -1.35150E-08 | C23 | 3.29953E-13 | C33 | -3.78266E-14 |
| | C4 | 6.42442E-04 | C14 | -2.42401 E-08 | C24 | -1.30396E-12 | C34 | -3.24626E-14 |
| | C5 | 2.24186E-04 | C15 | -1.50123E-08 | C25 | -2.61770E-12 | C35 | -7.31194E-14 |
| | C6 | 2.82680E-04 | C16 | 5.54456E-11 | C26 | 7.15778E-12 | C36 | -1.67198E-14 |
| | C7 | -1.05217E-06 | C17 | -4.48093E-11 | C27 | -1.77985E-15 | | |
| | C8 | -2.04647E-06 | C18 | 2.08731 E-10 | C28 | -1.25773E-12 | | |
| | C9 | -3.86010E-08 | C19 | 5.34663E-10 | C29 | 1.57202E-15 | | |
| | C10 | -1.19404E-06 | C20 | -1.08422E-10 | C30 | -7.54732E-16 | | |

Numerical Example 4

A projection optical system in Numerical Example 4 corresponds to projection optical system 120 of the fourth exemplary embodiment. Data configuring projection optical system 120 in Numerical Example 4 are shown in TABLE 7, and coefficients of the polynomial free-form surfaces are shown in TABLE 8.

TABLE 7

| | Surface number | Shape | Radius of curvature in X-direction | Radius of curvature in Y-direction | Eccentric data | | | | | |
|---|---|---|---|---|---|---|---|---|---|---|
| | | | | | X | Y | Z | ADE | BDE | CDE |
| Display surface | 1 | | ∞ | ∞ | 0 | 0 | 0 | 0 | 0 | 0 |
| First mirror | 2 | Free-form surface | 732.689 | 732.689 | 2.428 | 12.177 | 84.561 | 18.110 | -61.305 | 24.235 |
| Second mirror | 3 | Free-form surface | -799.046 | -799.046 | -109.414 | 5.010 | 131.731 | 129.239 | -59.806 | 134.841 |
| Front glass | 4 | Toroidal | -3745.758 | -34321.990 | 23.719 | 134.052 | 29.521 | 91.815 | 24.591 | 102.913 |
| Eye | 5 | | ∞ | ∞ | 897.330 | 153.940 | -188.735 | 18.713 | 76.277 | 165.512 |

TABLE 8

| Surface number | Polynomial coefficients | | | | | | | |
|---|---|---|---|---|---|---|---|---|
| 2 | C1 | 0.00000E+00 | C11 | -1.51374E-09 | C21 | 9.83068E-09 | C31 | 0.00000E+00 |
| | C2 | 2.36695E-01 | C12 | 2.09627E-08 | C22 | -2.41709E-12 | C32 | 0.00000E+00 |
| | C3 | 2.96483E-02 | C13 | 2.44667E-08 | C23 | 5.52831 E-12 | C33 | 0.00000E+00 |
| | C4 | -2.73230E-04 | C14 | 5.05379E-08 | C24 | 6.02120E-11 | C34 | 0.00000E+00 |
| | C5 | 9.96624E-04 | C15 | -2.60598E-08 | C25 | 2.45725E-10 | C35 | 0.00000E+00 |
| | C6 | -6.53444E-04 | C16 | -1.60143E-10 | C26 | 4.18082E-10 | C36 | 0.00000E+00 |
| | C7 | -9.62917E-08 | C17 | 1.22411E-09 | C27 | 2.76941E-10 | | |
| | C8 | -6.12093E-07 | C18 | 7.03452E-09 | C28 | 1.36758E-10 | | |
| | C9 | -8.30154E-06 | C19 | 1.81193E-08 | C29 | 0.00000E+00 | | |
| | C10 | -9.83967E-06 | C20 | 1.91924E-08 | C30 | 0.00000E+00 | | |
| 3 | C1 | 0.00000E+00 | C11 | 1.41854E-09 | C21 | 2.78571E-10 | C31 | 4.20619E-15 |
| | C2 | 5.61837E-02 | C12 | 6.39225E-09 | C22 | -5.55095E-13 | C32 | 2.68543E-15 |
| | C3 | -1.59699E-02 | C13 | -1.01626E-08 | C23 | 1.92040E-13 | C33 | -4.04556E-14 |
| | C4 | 5.72873E-04 | C14 | -2.19184E-08 | C24 | -1.27205E-12 | C34 | -3.34700E-14 |
| | C5 | 2.57329E-04 | C15 | -7.03954E-09 | C25 | -2.20963E-12 | C35 | -8.91245E-14 |
| | C6 | 2.76542E-04 | C16 | 5.92330E-11 | C26 | 7.73175E-12 | C36 | -6.23003E-14 |
| | C7 | -9.26061 E-07 | C17 | -3.15071E-11 | C27 | 4.10015E-13 | | |
| | C8 | -2.11199E-06 | C18 | 1.55731E-10 | C28 | 3.26635E-12 | | |
| | C9 | 7.56936E-08 | C19 | 4.59406E-10 | C29 | 1.48396E-15 | | |
| | C10 | -1.08689E-06 | C20 | -1.64261 E-10 | C30 | -5.81719E-16 | | |

Numerical Example 5

A projection optical system in Numerical Example 5 corresponds to projection optical system 120 of the fifth exemplary embodiment. Data configuring projection optical system 120 in Numerical Example 5 are shown in TABLE 9, and coefficients of the polynomial free-form surfaces are shown in TABLE 10.

TABLE 9

| | Surface number | Shape | Radius of curvature in X-direction | Radius of curvature in Y-direction | Eccentric data | | | | | |
|---|---|---|---|---|---|---|---|---|---|---|
| | | | | | X | Y | Z | ADE | BDE | CDE |
| Display surface | 1 | | ∞ | ∞ | 0 | 0 | 0 | 0 | 0 | 0 |
| First mirror | 2 | Toroidal | -4257.278 | -3639.017 | -23.220 | -69.998 | 121.392 | 2.259 | -34.134 | -68.531 |
| Second mirror | 3 | Free-form surface | -831.004 | -831.004 | -97.478 | -110.797 | 102.922 | 83.678 | -56.352 | 37.710 |
| Front glass | 4 | Toroidal | -3745.758 | -34321.990 | -17.386 | 107.403 | 79.755 | 95.819 | 23.079 | 88.418 |
| Eye | 5 | | ∞ | ∞ | 883.126 | 121.436 | 69.309 | 91.787 | 85.229 | 90.002 |

TABLE 10

| Surface number | Polynomial coefficients | | | | | | | |
|---|---|---|---|---|---|---|---|---|
| | | | | | | | | |
| 3 | C1 | 0.00000E+00 | C11 | 1.29744E-10 | C21 | -2.87705E-12 | C31 | 0.00000E+00 |
| | C2 | -7.38999E-04 | C12 | -4.10673E-10 | C22 | 0.00000E+00 | C32 | 0.00000E+00 |
| | C3 | -9.66230E-04 | C13 | -4.09621 E-10 | C23 | 0.00000E+00 | C33 | 0.00000E+00 |
| | C4 | 2.95276E-05 | C14 | 1.49680E-10 | C24 | 0.00000E+00 | C34 | 0.00000E+00 |
| | C5 | 2.34828E-06 | C15 | 1.70254E-10 | C25 | 0.00000E+00 | C35 | 0.00000E+00 |
| | C6 | 7.38320E-07 | C16 | 3.58825E-12 | C26 | 0.00000E+00 | C36 | 0.00000E+00 |
| | C7 | -1.55177E-07 | C17 | -1.30160E-11 | C27 | 0.00000E+00 | | |
| | C8 | 3.83178E-08 | C18 | -2.17878E-12 | C28 | 0.00000E+00 | | |
| | C9 | 7.79831E-08 | C19 | 6.54078E-12 | C29 | 0.00000E+00 | | |
| | C10 | 2.51713E-08 | C20 | 2.05295E-12 | C30 | 0.00000E+00 | | |

Numerical Example 6

A projection optical system in Numerical Example 6 corresponds to projection optical system 120 of the sixth exemplary embodiment. Data configuring projection optical system 120 in Numerical Example 6 are shown in TABLE 11, and coefficients of the polynomial free-form surfaces are shown in TABLE 12.

TABLE 11

| | Surface number | Shape | Radius of curvature in X-direction | Radius of curvature in Y-direction | Eccentric data | | | | | |
|---|---|---|---|---|---|---|---|---|---|---|
| | | | | | X | Y | Z | ADE | BDE | CDE |
| Display surface | 1 | | ∞ | ∞ | 0 | 0 | 0 | 0 | 0 | 0 |
| First mirror | 2 | Free-form surface | 789.312 | 789.312 | -0.146 | 11.942 | 75.968 | 19.518 | -62.135 | 39.544 |
| Second mirror | 3 | Free-form surface | -798.152 | -798.152 | -118.698 | 3.603 | 130.917 | 130.396 | -64.123 | 139.812 |
| Front glass | 4 | Toroidal | -3745.758 | -34321.990 | 11.876 | 129.647 | 50.756 | 87.273 | 17.470 | 99.824 |
| Eye | 5 | | ∞ | ∞ | 892.137 | 59.465 | -126.567 | 43.047 | 74.994 | 134.604 |

TABLE 12

| Surface number | Polynomial coefficients | | | | | | | |
|---|---|---|---|---|---|---|---|---|
| 2 | C1 | 0.00000E+00 | C11 | -7.32689E-09 | C21 | 5.35101E-09 | C31 | 0.00000E+00 |
| | C2 | 2.55624E-01 | C12 | 5.98228E-08 | C22 | 1.77933E-12 | C32 | 0.00000E+00 |
| | C3 | 3.44461E-02 | C13 | -2.69923E-10 | C23 | 1.70130E-11 | C33 | 0.00000E+00 |
| | C4 | 2.57652E-04 | C14 | 3.95941E-08 | C24 | 1.79316E-10 | C34 | 0.00000E+00 |
| | C5 | 5.83595E-04 | C15 | 4.43499E-08 | C25 | 4.46744E-10 | C35 | 0.00000E+00 |
| | C6 | -5.27246E-04 | C16 | 2.41501 E-12 | C26 | 5.21501E-10 | C36 | 0.00000E+00 |
| | C7 | 2.09641E-06 | C17 | 2.25241E-09 | C27 | 2.46278E-10 | | |
| | C8 | 5.63140E-07 | C18 | 1.13188E-08 | C28 | 2.90182E-11 | | |
| | C9 | -5.51595E-06 | C19 | 2.15796E-08 | C29 | 0.00000E+00 | | |
| | C10 | -5.38832E-06 | C20 | 1.69578E-08 | C30 | 0.00000E+00 | | |
| 3 | C1 | 0.00000E+00 | C11 | 2.52818E-09 | C21 | 3.40057E-11 | C31 | 3.22528E-15 |
| | C2 | 4.87536E-02 | C12 | 6.57187E-09 | C22 | -6.43585E-13 | C32 | 2.97998E-15 |
| | C3 | -1.91602E-02 | C13 | -1.22355E-08 | C23 | 2.25344E-13 | C33 | -4.92059E-14 |
| | C4 | 5.40760E-04 | C14 | -2.92192E-08 | C24 | -1.17034E-12 | C34 | -6.79981 E-14 |
| | C5 | 1.76035E-04 | C15 | -4.31238E-09 | C25 | -2.68099E-12 | C35 | -3.53275E-14 |
| | C6 | 2.13429E-04 | C16 | 6.61558E-11 | C26 | 6.68600E-12 | C36 | 5.76448E-15 |
| | C7 | -1.15317E-06 | C17 | -3.62146E-11 | C27 | 4.19590E-12 | | |
| | C8 | -1.52008E-06 | C18 | 1.78617E-10 | C28 | -2.13074E-12 | | |
| | C9 | 3.00328E-07 | C19 | 5.11226E-10 | C29 | 1.75568E-15 | | |
| | C10 | -3.37674E-07 | C20 | -7.15351E-11 | C30 | -9.13190E-16 | | |

Numerical Example 7

A projection optical system in Numerical Example 7 corresponds to projection optical system 120 of the seventh exemplary embodiment. Data configuring projection optical system 120 in Numerical Example 7 are shown in TABLE 13, and coefficients of the polynomial free-form surfaces are shown in TABLE 14.

TABLE 13

| | Surface number | Shape | Radius of curvature in X-direction | Radius of curvature in Y-direction | Eccentric data | | | | | |
|---|---|---|---|---|---|---|---|---|---|---|
| | | | | | X | Y | Z | ADE | BDE | CDE |
| Display surface | 1 | | ∞ | ∞ | 0 | 0 | 0 | 0 | 0 | 0 |
| First mirror | 2 | Free-form surface | 685.283 | 685.283 | 2.618 | 15.761 | 73.204 | -0.308 | -57.397 | 14.767 |
| Second mirror | 3 | Free-form surface | -609.288 | -609.288 | -86.074 | 28.235 | 93.932 | 133.953 | -80.451 | 149.140 |
| Front glass | 4 | Toroidal | -3745.758 | -34321.990 | 70.533 | 113.679 | 54.133 | 77.707 | 4.226 | 95.737 |
| Eye | 5 | | ∞ | ∞ | 929.089 | -139.277 | -109.848 | 61.256 | 65.277 | 104.432 |

TABLE 14

| Surface number | Polynomial coefficients | | | | | | | |
|---|---|---|---|---|---|---|---|---|
| 2 | C1 | 0.00000E+00 | C11 | -2.46530E-09 | C21 | -1.14686E-09 | C31 | 0.00000E+00 |
| | C2 | 2.00240E-01 | C12 | 9.34733E-08 | C22 | -3.38728E-12 | C32 | 0.00000E+00 |
| | C3 | 7.89806E-02 | C13 | 1.33213E-07 | C23 | -2.85029E-12 | C33 | 0.00000E+00 |
| | C4 | 8.16806E-04 | C14 | -9.74754E-08 | C24 | 4.49979E-11 | C34 | 0.00000E+00 |
| | C5 | 1.78021E-04 | C15 | -2.38546E-07 | C25 | 3.22756E-10 | C35 | 0.00000E+00 |
| | C6 | -8.29524E-04 | C16 | -2.51794E-10 | C26 | 5.33705E-10 | C36 | 0.00000E+00 |
| | C7 | 3.49852E-06 | C17 | 2.40795E-09 | C27 | 2.64435E-10 | | |
| | C8 | -5.13821 E-06 | C18 | 1.34210E-08 | C28 | 1.61218E-11 | | |
| | C9 | -1.29654E-05 | C19 | 2.40027E-08 | C29 | 0.00000E+00 | | |
| | C10 | -8.18501 E-06 | C20 | 1.25719E-08 | C30 | 0.00000E+00 | | |
| 3 | C1 | 0.00000E+00 | C11 | 1.30256E-09 | C21 | -1.95595E-10 | C31 | -8.54435E-16 |
| | C2 | 3.05779E-02 | C12 | 5.32444E-09 | C22 | -6.79785E-13 | C32 | 3.28409E-14 |
| | C3 | -1.64430E-03 | C13 | -6.88983E-09 | C23 | 4.02203E-13 | C33 | -2.92385E-14 |
| | C4 | 7.63474E-04 | C14 | -2.18171E-08 | C24 | -9.11665E-13 | C34 | -7.23767E-14 |
| | C5 | 7.20995E-05 | C15 | -2.24884E-08 | C25 | -5.47691 E-12 | C35 | -2.66418E-13 |
| | C6 | 1.36440E-04 | C16 | 6.70226E-11 | C26 | 5.50913E-12 | C36 | -2.71287E-13 |
| | C7 | -1.47028E-06 | C17 | -7.22770E-11 | C27 | 8.99805E-12 | | |
| | C8 | -1.47450E-06 | C18 | 1.79610E-10 | C28 | 6.54532E-13 | | |
| | C9 | -4.49132E-07 | C19 | 4.10772E-10 | C29 | 2.15483E-15 | | |
| | C10 | -2.76299E-07 | C20 | 3.40053E-10 | C30 | -6.83660E-16 | | |

A size of the displayed image, a size of the virtual image and distance T from the eye of viewer D to the virtual image in each of the Numerical Examples are shown in the following TABLE 15.

TABLE 15

| | | Example 1 | Example 2 | Example 3 | Example 4 | Example 5 | Example 6 | Example 7 |
|---|---|---|---|---|---|---|---|---|
| Display size | X | 30.0 | 38.0 | 28.0 | 28.0 | 40.0 | 55.0 | 35.0 |
| | Y | 15.0 | 19.0 | 14.0 | 14.0 | 20.0 | 17.5 | 12.5 |
| Virtual image size | X | 140 | 140 | 140 | 172 | 140 | 220 | 126 |
| | Y | 70 | 70 | 70 | 86 | 70 | 70 | 45 |
| Distance from eye to virtual image | | 2000 | 2000 | 2200 | 2450 | 2000 | 2000 | 1800 |

Values corresponding to the conditions (1) and (2) in each of the Numerical Examples are shown in the following TABLE 16.

TABLE 16

| | Example 1 | Example 2 | Example 3 | Example 4 | Example 5 | Example 6 | Example 7 |
|---|---|---|---|---|---|---|---|
| Condition (1) $\theta x$ | 30.26 | 39.06 | 39.85 | 39.99 | 42.39 | 39.83 | 35.93 |

(continued)

| | Example 1 | Example 2 | Example 3 | Example 4 | Example 5 | Example 6 | Example 7 |
|---|---|---|---|---|---|---|---|
| Condition (1) θy | 23.77 | 35.69 | 8.93 | 13.85 | 0.03 | 29.11 | 27.61 |
| Condition (2) | 0.41 | 0.46 | 0.51 | 0.43 | 0.82 | 0.30 | 0.52 |

Sags of the second mirror in each of the Numerical Examples are shown in the following TABLE 17, in which a distance from the reference intersection to a point on the right of the reference intersection on the vehicle is expressed as a positive value.

TABLE 17

| | Sag | | | | | | |
|---|---|---|---|---|---|---|---|
| Distance from reference intersection | Example 1 | Example 2 | Example 3 | Example 4 | Example 5 | Example 6 | Example 7 |
| 50 | 3.503 | 3.216 | 2.630 | 2.450 | 1.579 | 2.405 | 3.273 |
| 40 | 2.241 | 2.052 | 1.693 | 1.576 | 1.014 | 1.545 | 2.114 |
| 30 | 1.258 | 1.150 | 0.957 | 0.890 | 0.572 | 0.872 | 1.199 |
| 20 | 0.557 | 0.509 | 0.427 | 0.397 | 0.255 | 0.388 | 0.537 |
| 10 | 0.139 | 0.126 | 0.107 | 0.099 | 0.064 | 0.097 | 0.135 |
| 0 | 0.000 | 0.000 | 0.000 | 0.000 | 0.000 | 0.000 | 0.000 |
| -10 | 0.137 | 0.125 | 0.107 | 0.100 | 0.064 | 0.098 | 0.137 |
| -20 | 0.541 | 0.496 | 0.428 | 0.398 | 0.257 | 0.393 | 0.549 |
| -30 | 1.205 | 1.107 | 0.962 | 0.893 | 0.579 | 0.881 | 1.239 |
| -40 | 2.117 | 1.952 | 1.707 | 1.583 | 1.029 | 1.562 | 2.207 |
| -50 | 3.264 | 3.023 | 2.658 | 2.464 | 1.607 | 2.439 | 3.450 |

INDUSTRIAL APPLICABILITY

The display apparatus in accordance with the present disclosure is suitable for use in display apparatuses which are required to have a high image quality, such, for example, as the head-up display used for vehicles or the like.

REFERENCE MARKS IN THE DRAWINGS

| | |
|---|---|
| 10 | display unit |
| 100 | chassis |
| 101 | display device |
| 102 | opening |
| 103 | first light shielding section |
| 104 | second light shielding section |
| 105 | first end |
| 106 | second end |
| 110 | display screen |
| 120 | projection optical system |
| 121 123 | first mirror |
| 122 | second mirror |
| 200 | vehicle |
| 210 | dashboard |

| | |
|---|---|
| 220 | windshield |
| 300 | viewpoint area |
| D | viewer |
| I | virtual image |
| X | optical path |

**Claims**

**1.** A display apparatus that allows a viewer to visually recognize a virtual image, the display apparatus comprising:

a display device that displays an image; and
a projection optical system that projects the image displayed at the display device,
wherein the projection optical system includes a first mirror and a second mirror disposed in order from a side of the display device along an optical path from the display device to a viewpoint area of the viewer, and
wherein the display apparatus satisfies the following conditions (1) and (2):

$$\theta x > \theta y \qquad \ldots (1)$$

$$0.2 < D1/(T \times 2 \times \tan(\theta h/2)) < 0.9 \qquad \ldots (2)$$

where

$\theta x$: an incident angle of a light ray incident on the first mirror in a longitudinal direction of a display screen of the display device,
$\theta y$: an incident angle of the light ray incident on the first mirror in a crosswise direction of the display screen of the display device,
D1: a distance between an image display surface of the display device and the first mirror on an optical path of a light ray that reaches a center of the viewpoint area from the display device,
T: a distance from an eye of the viewer to the virtual image, and
$\theta h$: an angle made by a first straight line and a second straight line, where the first straight line is a straight line connecting one end in a horizontal direction of a virtual image visually recognized by the viewer and the eye of the viewer, and the second straight line is a straight line connecting the other end in the horizontal direction of the virtual image visually recognized by the viewer and the eye of the viewer.

**2.** The display apparatus according to claim 1, wherein the display apparatus is mounted on a vehicle having a windshield, and
wherein the projection optical system projects the image on the windshield so as to allow the viewer to visually recognize the projected image as the virtual image.

**3.** The display apparatus according to claim 1, wherein the second mirror has a free-form surface shape.

**4.** The display apparatus according to claim 3, wherein the first mirror has a shape that is rotationally asymmetrical.

**5.** The display apparatus according to claim 4, wherein the first mirror has a convex surface shape.

**6.** The display apparatus according to claim 5, wherein the second mirror has a concave surface shape.

**7.** A display apparatus that allows a viewer to visually recognize a virtual image, the display apparatus comprising:

a display device that displays an image; and
a projection optical system that projects the image displayed at the display device,
wherein the projection optical system includes a first mirror and a second mirror disposed in order from a side of the display device along an optical path from the display device to a viewpoint area of the viewer,
wherein a reflection surface of at least one of the first mirror and the second mirror has a concave shape, and

wherein, assuming that a reference light ray be a light ray which reaches a center of the viewpoint area of the viewer from a center of a display screen of the display device, that a reference intersection be an intersection of the second mirror and the reference light ray incident on the second mirror, that a first reference plane be a plane containing a light ray incident on the second mirror and a light ray reflected from the second mirror, a second reference plane be a plane perpendicular to the first reference plane, that a reference intersecting line be a line which is an intersecting line of the second mirror and the second reference plane and which passes through the reference intersection, and that a sag be a vertical distance from a tangent plane at the reference intersection on the reflection surface of the second mirror to the second mirror, a first sag at a first point on the tangent plane is different from a second sag at a second point on the tangent plane which is point-symmetrical to the first point with respect to the reference point.

**8.** The display apparatus according to claim 7, wherein, assuming that the second mirror be divided to an upper surface upper than the reference intersecting line in the vertical direction and a lower surface lower than the reference intersecting line in the vertical direction, a focal length of a local surface containing an arbitrary point on the upper surface is different from a focal length of a local surface containing an arbitrary point on the lower surface.

D
210
10
220
L
200
I

FIG. 1

300
D
L
220
102
122
121
120
10
101
100
I

FIG. 2

I
100
220
102
122
121
120
101
L
300
D
10

FIG. 3

FIG. 4

Z
X
Y
123

FIG. 5

(1)
First reference plane P1
122
Reference intersecting line li
Reflected light ray
Incident light ray
Second reference plane P2
Reference intersection Pi
(2)
Second reference plane P2
First reference plane P1
Second point D2
Tangent plane Pt
Reference intersection Pi
First point A1
Reference intersecting line li
First sag Sag1
Second sag Sag2

FIG. 6

Y
101
Z
X
110

FIG. 7

(1)
(2)
(3)
Y
Z
X
B
121
Lin
In
B
θx
Lpx
Ipx
B
θy
Lpy
Ipy

FIG. 8

I
Ish
Lh
I1
I2
T
θh
C

(1)
(2)
(3)
(4)
(5)

FIG. 9

FIG. 10

(1)
(2)
(3)
(4)
(5)
-80
-60
-40
-20
0
20
40
60
80
40
30
20
10
0
10
-20
-30
-40

FIG. 11

(1)
(2)
(3)
(4)
(5)
80
60
40
20
0
-20
-40
-60
-80
40
30
20
10
-10
-20
-30
-40

FIG. 12

(1)

(2)

(3)

(4)

(5)

FIG. 13

(1)
(2)
(3)
(4)
(5)
40
30
20
10
0
-20
-30
-40
-120
-80
-40
40
80
120

FIG. 14

FIG. 15

(1)
(2)
(3)
(4)
(5)
30
20
10
0
10
-20
-30
-80
-60
-40
-20
0
20
40
60
80

## INTERNATIONAL SEARCH REPORT

International application No.
PCT/JP2015/000835

A. CLASSIFICATION OF SUBJECT MATTER
*G02B27/01*(2006.01)i, *B60K35/00*(2006.01)i

According to International Patent Classification (IPC) or to both national classification and IPC

B. FIELDS SEARCHED

Minimum documentation searched (classification system followed by classification symbols)
G02B27/01, B60K35/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-203680 A (Denso Corp.), 13 October 2011 (13.10.2011), paragraphs [0032] to [0098]; fig. 1 & US 2011/0235185 A1 & KR 10-2011-0108292 A | 1-8 |
| A | JP 2004-226469 A (Denso Corp.), 12 August 2004 (12.08.2004), paragraphs [0028] to [0082]; all drawings (Family: none) | 1-8 |
| A | JP 2004-101829 A (Denso Corp.), 02 April 2004 (02.04.2004), paragraphs [0014] to [0034]; fig. 2 to 3 (Family: none) | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 April 2015 (14.04.15) | 21 April 2015 (21.04.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/000835

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.
PCT/JP2015/000835

Continuation of Box No.III of continuation of first sheet(2)

Supplementation of Box No. III:

Found in the invention of claim 1 is a special technical feature, i.e., a display apparatus which satisfies the conditional expressions (1) and (2) below:

$\theta x > \theta y$ ... (1), and

$0.2 < D1/(T \times 2 \times \tan(\theta h/2)) < 0.9$ ... (2),

where $\theta x$ is the angle of incidence of light incident on a first mirror in the longitudinal direction of the display screen of a display device; $\theta y$ is the angle of incidence of light incident on the first mirror in the lateral direction of the display screen of the display device; D1 is the separation between the image display surface of the display device and the first mirror in the optical path of a light beam that reaches from the display device to the center of an eyepoint region; T is the distance from the pupil of an observer's eye to a virtual image; and $\theta h$ is the angle formed by a first straight line and a second straight line, the first straight line connecting between the pupil of the observer's eye and one horizontal end of a virtual image visually identified by the pupil of the observer's eye, the second straight line connecting between the pupil of the observer's eye and the other horizontal end of the virtual image visually identified by the pupil of the observer's eye.

The inventions of claims 2-6, which are dependent on claim 1, have a special technical feature.

On the other hand, the inventions of claims 7 and 8 and the invention of claim 1 have a common technical feature, i.e., "a display apparatus for an observer to visually identify a virtual image, the display apparatus including a display device displaying an image and a projection optical system for projecting the image displayed on the display device, wherein the projection optical system has a first mirror and a second mirror sequentially from the display device along the optical path from the display device to the eyepoint region of the observer."

However, the above-said technical feature cannot be considered to be a special technical feature, since the technical feature does not make a contribution over the prior art in the light of the contents disclosed in, for example, the document 1 (JP 2011-203680 A (Denso Corp.), 13 October 2011 (13.10.2011), paragraphs [0032] to [0098]; fig. 1) and the document 2 (JP 2004-226469 A (Denso Corp.), 12 August 2004 (12.08.2004), paragraphs [0028] to [0082]; all drawings).

Further, there is no other same or corresponding special technical feature between the invention of claim 1 and the inventions of claims 7 and 8.

Accordingly, the inventions of claims are classified into two inventions each of which has a special technical feature indicated below.

(Invention 1) claims 1-6:

A display apparatus satisfying the conditional expressions (1) and (2) below, that is,

$\theta x > \theta y$ ... (1), and

$0.2 < D1/(T \times 2 \times \tan(\theta h/2)) < 0.9$ ... (2),

(Continued to next extra sheet)

INTERNATIONAL SEARCH REPORT

International application No. PCT/JP2015/000835

where θx is the angle of incidence of light incident on a first mirror in the longitudinal direction of the display screen of a display device; θy is the angle of incidence of light incident on the first mirror in the lateral direction of the display screen of the display device; D1 is the separation between the image display surface of the display device and the first mirror in the optical path of a light beam that reaches from the display device to the center of an eyepoint region; T is the distance from the pupil of an observer's eye to a virtual image; and θh is the angle formed by a first straight line and a second straight line, the first straight line connecting between the pupil of the observer's eye and one horizontal end of the virtual image visually identified by the pupil of the observer's eye, the second straight line connecting between the pupil of the observer's eye and the other horizontal end of the virtual image visually identified by the pupil of the observer's eye.

(Invention 2) claims 7 and 8:

A display apparatus with a first sag at a first point on a tangent plane being different from a second sag at a second point on the tangent plane, the second point and the first point being symmetric about a reference intersection point, wherein the reflection surface of at least one of a first mirror and a second mirror has a concave surface; a reference light beam is defined as a beam of light which is emitted from the center of the display screen of a display device and which then reaches the center of an eyepoint region of an observer; the reference intersection point is defined as an intersection point between the second mirror and the reference light beam incident on the second mirror; a first reference plane is defined as a plane which includes a beam of light incident on the second mirror and a beam of light reflected therefrom; a second reference plane is defined as a plane perpendicular to the first reference plane; a reference intersection line is defined as a line of intersection between the second mirror and the second reference plane, the reference intersection line passing through the reference intersection point; and a sag is defined as the perpendicular distance from the tangent plane at the reference intersection point on the reflection surface of the second mirror to the second mirror.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013125193 A
- JP 2013228442 A